Europäisches Patentamt

European Patent Office

Office européen des brevets

(19)

(11)  EP 0 667 526 B1

(12)  EUROPÄISCHE PATENTSCHRIFT

(45) Veröffentlichungstag und Bekanntmachung des
Hinweises auf die Patenterteilung:
18.02.1998  Patentblatt 1998/08

(51) Int Cl.⁶: **G01N 29/04**, G01N 29/10

(21) Anmeldenummer: **94110696.5**

(22) Anmeldetag: **09.07.1994**

(54) **Verfahren zur zerstörungsfreien Prüfung von Eisenbahnrädern**

Method for non-destructive testing of railway wheels

Procédé de contrôle non-destructif des roues des trains

(84) Benannte Vertragsstaaten:
**DE DK ES FR GB IT**

(30) Priorität: **11.02.1994  DE 4404356**

(43) Veröffentlichungstag der Anmeldung:
**16.08.1995   Patentblatt 1995/33**

(73) Patentinhaber: **HEGENSCHEIDT-MFD GmbH
D-41812 Erkelenz (DE)**

(72) Erfinder: **Schneider, Friedhelm, Dr.-Ing.
D-41844 Wegberg (DE)**

(74) Vertreter: **Castell, Klaus, Dr.-Ing. et al
Patentanwaltskanzlei
Liermann - Castell
Schillingsstrasse 335
52355 Düren (DE)**

(56) Entgegenhaltungen:
**EP-A- 0 139 317            US-A- 3 812 708
US-A- 4 890 496**

**Beschreibung**

Die Erfindung betrifft ein Verfahren zur zerstörungsfreien Prüfung von Eisenbahnrädern mittels Ultraschall auf Risse im Bereich der Radumfangsfläche, wobei in das Rad von einem Ort der Radumfangsfläche aus ein im Werkstück Rayleighwellen ausbildender Ultraschallimpuls mit einer ersten Frequenz eingeschaltet wird, dessen Echo an einem Riß ein Fehlerecho ergibt, das erfaßt und ausgewertet wird.

Ein Verfahren der eingangs beschriebenen Art ist bekannt geworden durch die US-PS 3,812,708. Mit dieser Einrichtung ist es möglich, Risse in der Lauffläche von Rädern aufzuspüren. Die aufgespürten Risse werden ohne Hinweis auf ihre Tiefe gemeldet. Eine Möglichkeit der Auswahl von Rissen sowie Anzeige nach ihrer Tiefe ist aus dieser Schrift nicht zu entnehmen.

In der Literarturstelle "Test prove validity of in-motion wheel crack detection" aus Railway Gazette International February 1974, Seite 69-71, wird eine Einrichtung nach dem US-Patent 3,812,708 beschrieben. Aus Seite 69, Spalte 3, Zeile 7 bis Zeile 5 auf Seite 71, Spalte 1 ist entnehmbar, daß die Meßempfindlichkeit der Einrichtung zur Meldung von Rissen oberhalb einer bestimmten Größe einstellbar ist. Wie eine solche Einstellbarkeit erreicht wird, ist allerdings nicht zu entnehmen. Das Echo eines Ultraschallsignals, das an einem Riß reflektiert wird, ist nicht nur abhängig von der Tiefe dieses Risses, sondern auch von der Länge dieses Risses. Somit kann aus einem Ultraschallecho eines Risses nicht eindeutig auf die Tiefe des Risses geschlossen werden.

Eine Aussagemöglichkeit über die Tiefe von Rissen und eine Meldung von Rissen ab einer bestimmten Rißtiefe ist aus der Literarturstelle der Railway Gazette, sowie aus der US-Patentschrift, nicht zu entnehmen.

Für die Beurteilung von gelaufenen Rädern ist die Rißtiefe von in der Lauffläche bzw. Radumfangsfläche vorhandenen Rissen von Bedeutung. Sie entscheidet, ob ein Rad noch betriebsfähig ist oder nicht. Es könnte beispielsweise festgelegt werden, Räder, die Risse in der Radumfangsfläche aufweisen, erst ab einer bestimmten Rißtiefe zu reprofilieren, damit nicht bei Rißtiefen, die als ungefährlich erkannt sind, unnötig Radwerkstoff durch nicht erforderliche Reprofilierung vergeudet wird.

In der Literarturstelle "Diagnoseverfahren zur zerstörungsfreien automatischen Erkennung von Schäden der Lauffläche an Hochgeschwindigkeitsfahrzeugen ohne Ausbau der Rädsätze" des Fraunhofer-Instituts für zerstörungsfreie Prüfverfahren wird über die Unterschuchung von Eisenbahnrädern auf Risse berichtet. Dieser Literarturstelle ist wie nachfolgend zusammengefaßt entnehmbar:

Die Größe des Fehlers wirkt sich auf die Amplitude des Fehlerechos aus. Bei Rissen gleicher Länge jedoch unterschiedlicher Tiefen zeigen sich unterschiedliche Amplituden des Fehlerechos. Diese unterschiedlichen Amplituden des Fehlerechos sind ein Hinweis auf unterschiedliche Rißtiefen bei gleich langen Rissen.

Falls die Länge von Rissen bekannt ist, läßt sich aus der Größe der Amplituden ein Rückschluß auf die Tiefe von Rissen herleiten. Da die Rißlänge aber die Amplitude des Fehlerechos stärker beeinflußt, als die Rißtiefe, ist bei unbekannter Rißlänge eine Herleitung der Tiefe von Rissen aus der Amplitude nicht möglich.

In dieser Literarturstelle wird ein Riß als Fehler bezeichnet, und die Größe eines solchen Fehlers ist definiert aus der Rißlänge und Rißtiefe. Das Produkt aus Rißlänge und Rißtiefe ist die Fläche, die ein Riß einnimmt. Die Fläche eines Risses ist maßgeblich für die reflektierte Energie, die im StdT als Fehlerecho bezeichnet wird und die Dimension Ws (Wattsekunde) hat.

Der Erfindung liegt somit die Aufgabe zugrunde, ein Verfahren der eingangs beschriebenen Art so weiterzuentwickeln, daß es möglich ist, bei Ultraschallprüfung von Eisenbahnrädern in der Radumfangsfläche vorhandene Risse, die sich von dort radial ins Radinnere erstrecken, aufzuspüren und mindestens deren mittlere Tiefe anzuzeigen.

Gelöst wird diese Aufgabe dadurch, daß in das Rad im Bereich der Radumfangsfläche mindestens ein weiterer Ultraschallimpuls mit je zum ersten unterschiedlicher Frequenz eingeschaltet wird, wobei entstehende Fehlerechos als von den Rißflächen rückgestrahlte Energien empfangen werden und daß das jeweilige Verhältnis dieser Energien je Riß gebildet wird, wobei der Zahlenwert dieses Verhältnisses unter Zugrundelegung der verwendeten Frequenzen als Bestimmungswert für die Rißtiefe verwendet wird, wobei die Ultraschallimpulse im Werkstück Rayleigwellen ausbilden sollen.

Mit dem Begriff "Radumfangsfläche" ist im wesentlichen gemeint die Lauffläche, die Oberfläche des Spurkranzes und die Verbindungsfläche zwischen diesen beiden Flächen.

Dieses Verfahren soll an einzelnen Eisenbahnrädern sowie an Radsätzen anwendbar sein, wobei die Radsätze eingebaut aber auch ausgebaut sein sollen können. Je nach Prüfanlage soll sich das Fahrzeug auch in Fahrt befinden können. Prüfanlagen, die allgemein eine Ultraschallprüfung am bewegten Fahrzeug ermöglichen, sind bekannt.

Als Ultraschall werden Schallschwingungen über 20 KHz bezeichnet. Bei derart hohen Frequenzen pflanzt sich der Schall in Festkörpern scharf gebündelt fort und wird an Grenzflächen zur Luft fast vollständig reflektiert. Bei Grenzflächen zu anderen Festkörpern hin, die sich in der Schallgeschwindigkeit oder Schalldurchlässigkeit unterscheiden, ergeben sich Teilreflexionen. Dieses Verhalten kann man günstig zum Fehlernachweis in Werkstücken anwenden, da bereits außerordentlich geringe Fehlergrößen in Schallrichtung eindeutig ermittelt werden. Die Fehlererkennbarkeit quer zur Richtung des Schalls steigt mit wachsenden Prüffrequenzen. Bei etwa 10 MHz werden Fehler mit einer Mindesausdehung von 0,5 mm einwandfrei festgestellt.

Da die Tiefe von Rissen nicht immer gleichmäßig verläuft, sondern an einem Riß unterschiedlich sein kann, ist es für solche Fälle vorteilhaft, mindestens eine mittlere Rißtiefe ermitteln zu können. Bei Rissen, deren Rißgrund gleichmäßig weit von der Radoberfläche entfernt ist, wird dann diese Tiefe ermittelt.

Bei der Prüfung der Radumfangsflächen von Eisenbahnrädern mit Ultraschall auf Risse wird eine Rayleighwelle erzeugt, die nur an der Grenzfläche, hier die Grenzfläche zwischen der Lauffläche und der Luft, existieren kann und die innerhalb des Radkörpers an der Radumfangsfläche herum läuft.

Die Rayleighwelle wird somit von der Radumangsfläche geführt. Die Eindringtiefe der Rayleighwelle hängt von der gewählten Frequenz ab. Ein Ultraschallimpuls mit einer niedrigeren Frequenz f1 hat eine größere Eindringtiefe als ein Ultraschallimpuls mit einer vergleichsweise höheren Frequenz f2.

Befinden sich keine Risse in der Radumfangsfläche eines Rades, erreicht die Energie des Ultraschallimpulses nahezu unvermindert den Einschallungsort. Ist jedoch ein Riß vorhanden, wird die Ultraschallenergie wenigstens teilweise reflektiert. Das vom Riß reflektierte Fehlerecho kann durch eine Empfangseinrichtung empfangen werden.

Die von einem Riß reflektierten Echos sind sowohl von der Länge als auch von der Rißtiefe abhängig. Da die Energieverteilung der Ultraschallwelle nur eine ausgeprägte Tiefenabhängigkeit besitzt, kürzt sich die Abhängigkeit von der Rißlänge bei der Verhältnisbildung der beiden Fehlerechos heraus.

In einer Ausgestaltung der Erfindung ist vorgeschlagen, daß die ermittelte Rißtiefe mit einer vorgegebenen Rißtiefe verglichen wird und nur die Risse mit einer größeren Rißtiefe als die vorgegebene angezeigt werden. Hierdurch wird die Ermittlung von Rissen mit unerlaubter Rißtiefe wesentlich vereinfacht.

In einer weiteren Ausgestaltung der Erfindung wird vorgeschlagen, daß die zwei Ultraschallimpulse unterschiedlicher Frequenzen gleichzeitig oder in bekanntem zeitlichen Abstand eingeschaltet werden. Diese Ultraschallimpulse werden durch die gleichzeitige Einschallung miteinander gemischt und werden dann auch von vorhandenen Rissen jeweils gemeinsam reflektiert und am Ort der Einschallung vom Empfänger auch jeweils gleichzeitig empfangen. Bei der Verarbeitung muß jedes Signal durch Filter oder durch eine Fourieranalyse aufbereitet und voneinander getrennt werden. Bei Einschallung in bekanntem zeitlichen Abstand können die Signale einzeln empfangen und als solche ausgewertet werden.

Diese Ultraschallimpulse können jeweils von einem zugeordneten Sender ausgesendet und von einem zugeordneten Empfänger empfangen werden. Es ist auch möglich, beide Ultraschallimpulse von einem einzigen Sender auszusenden und mit einem einzigen Empfänger zu empfangen.

Es kann vorteilhaft sein, das Ultraschallsignal mit Rechteckimpulsen anzuregen, da diese Rechtecksignale sowohl die Grundfrequenz als auch die dritte, fünfte, siebte usw. Oberwelle enthalten.

Die hierfür erforderlichen Mittel sind bekannt und müssen deshalb hier nicht weiter beschrieben werden.

Weitere Ausgestaltungen des Verfahrens sind in den weiteren Unteransprüchen beschrieben.

Das Verfahren soll nun mit Hilfe der beigefügten Skizzen näher erläutert werden.

Es zeigen:

Figur 1    die Energieverteilung in der Tiefe eines Prüfkörpers für einen Ultraschallimpuls mit einer Frequenz von 400 KHz, aufgetragen über die Eindringtiefe.

Figur 2    die Energieverteilung in der Tiefe eines Prüfkörpers für einen Untraschallimpuls mit einer Frequenz von 1200 KHz, aufgetragen über der Eindringtiefe.

Figur 3    den Kurvenverlauf des Energieverhältnisses über der Eindringtiefe unter Zugrundelegung der in den Fig. 1 u. 2 verwendeten Frequenzen.

Figur 4    ein Eisenbahnrad mit einem Riß bei einer Beschallung mit Ultraschall unterschiedlicher Frequenzen.

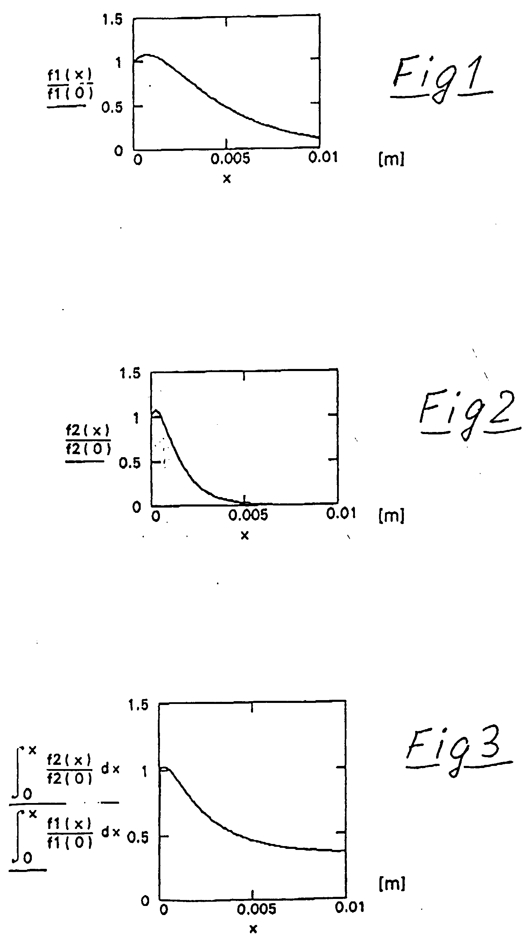

Aus den Figuren 1 und 2 ist die Energieverteilung einer Rayleighwelle bei zunehmender Eindringtiefe dargestellt.
Die Verteilung der Energie einer Rayleihwelle in die Tiefe ergibt sich wie folgt:
$c_l = 594$ m/s Longitudinalwelle $C_p = c_l$
$c_t = 324$ m/s Transversalwelle $c_S = c_t$
bei $\upsilon = 0,33$ ist $C_r = 0,932 \cdot C_s$ Geschwindigkeit der Rayleighwelle
$\pi = 3.14$
$f1 = 400000 Hz$        $f2 = 1200000$ Hz
$\omega1 = 2 \cdot \pi \cdot f1$ Kreisfrequenz        $\omega2 = 2 \cdot \pi \cdot f2$ Kreisfrequenz

$$L1 = \frac{Cr}{f1} \qquad L2 = \frac{Cr}{f2}$$

$$k1 = \frac{\omega1}{Cr} \qquad k2 = \frac{\omega2}{Cr}$$

$$pH1 = \sqrt{k1^2 - \frac{\omega1^2}{Cp^2}} \qquad pH2 = \sqrt{k2^2 - \frac{\omega2^2}{Cs^2}}$$

$$qH1 = \sqrt{k1^2 - \frac{\omega1^2}{Cs^2}} \qquad qH2 = \sqrt{k2^2 - \frac{\omega2^2}{Cp^2}}$$

$$f1\,(x) = pH1 \cdot \left[ \frac{2 \cdot k1^2}{[\,qH1^2 + k1^2\,]} \cdot \exp\,(-\,qH1 \cdot x) - \exp\,(-pH1 \cdot x) \right]$$

$$f2\,(x) = pH2 \cdot \left[ \frac{2 \cdot k2^2}{[\,qH2^2 + k2^2\,]} \cdot \exp\,(-\,qH2 \cdot x) - \exp\,(-pH2 \cdot x) \right]$$

Hierin bedeuten:

| | |
|---|---|
| cl = | Longitudinalwelle |
| Cp = | englische Bezeichnung Preasurewave |
| ct = | Transversalwelle |
| Cs = | englische Bezeichnung Shearwave |
| $\upsilon$ = | Poissonzahl |
| Cr = | Geschwindigkeit der Rayleighwelle |
| f1 = | Frequenz der Ultraschallwelle 1 |
| f2 = | Frequenz der Ultraschallwelle 2 |
| $\omega1$ = | Kreisfrequenz der Ultraschallwelle 1 |
| $\omega2$ = | Kreisfrequenz der Ultraschallwelle 2 |
| L1 = | Wellenlänge der Ultraschallwelle 1 |
| L2 = | Wellenlänge der Ultraschallwelle 2 |
| k1 = | Wellenzahl der Ultraschallwelle 1 |
| k2 = | Wellenzahl der Ultraschallwelle 2 |
| pH1, pH2, qH1, qH2 = | Zwischenwerte der Rechnung |
| x = | Koordinate senkrecht zur Oberfläche |
| f1(x) = | Funktion der Ausbreitung der Rayleighwelle der Frequenz 1 senkrecht zur Oberfläche |
| f2(x) = | Funktion der Ausbreitung der Rayleighwelle der Frequenz 2 senkrecht zur Oberfläche |
| exp = | Potenz von "e" mit dem angegebenen Exponenten |

In der Fig. 1 und 2 ist die Abhängigkeit der Energie einer Rayleighwelle über die Tiefe aufgetragen. Dabei wird deutlich, daß beispielsweise die Energie bei 400 KHz (Fig. 1) über die Tiefe wesentlich langsamer abklingt als bei einer Frequenz von 1200 KHz (Fig.2).

Wird an einem Rad 5, Figur 4, von einem Ort 1 aus in die Radumfangsfläche 6 ein Ultraschallimpuls 7 mit einer höheren Frequenz f2 als f1 eingeleitet, verläuft die Schallenergie mit geringerer Eindringtiefe an der Radumfangsfläche 6 entlang als bei Ultraschallimpuls 8 mit niedrigerer Frequenz f1.

Das Bezugszeichen 2 soll auf die Eindringtiefe des Ultraschallimpulses 7 der höheren Frequenz f2 hinweisen und das Bezugszeichen 3 soll auf die Eindringtiefe des Ultraschallimpulses 8 mit der niedrigeren Frequenz f1 hinweisen.

Die Ultraschallimpulse werden tangential in der oberflächennahen Schicht erzeugt. Dabei läuft ein Impuls im Uhrzeigersinn und ein Impuls entgegen dem Uhrzeigersinn um das Rad herum. Zum einfacheren Verständnis soll nur der im Uhrzeigersinn verlaufende Ultraschallimpuls betrachtet werden. Jedoch gelten die Betrachtungen auch, wenn beide Ultraschallimpulse um das Rad herum laufen.

In dem Rad 5 ist ein Riß 4 mit einer angenommenen Rißtiefe 9 dargestellt. Wird nun ein Ultraschallimpuls 7 hoher Frequenz f2, beispielsweise mit einer Frequenz von 1200 KHz eingeleitet, trifft dieser auf den Riß 4 und dann wird entsprechend der Energieverteilung über der Tiefe viel Energie reflektiert und am Ort 1, wo sich der Empfänger befinden soll, empfangen.

Wird ein Ultraschallimpuls 8 niedriger Frequenz f1, beispielsweise mit einer Frequenz von 400 KHz eingeleitet, trifft dieser ebenfalls auf den Riß 4. Von diesem Ultraschallimpuls wird jedoch, aufgrund der anderen Energieverteilung, wesentlich weniger Energie reflektiert als von dem Ultraschallimpuls 7. Diese Energie des reflektierenden Fehlerechos kann am Ort 1 ebenfalls empfangen werden.

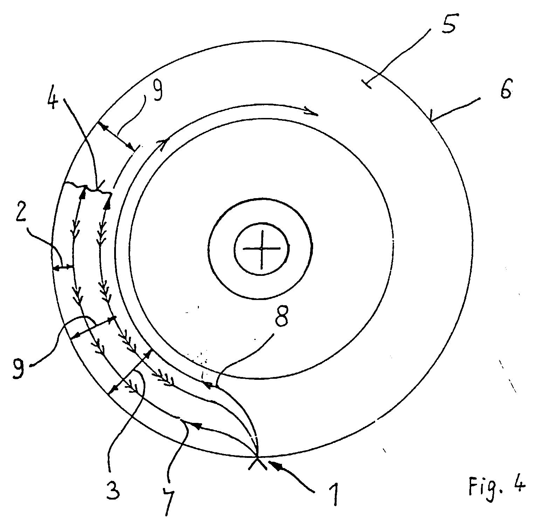

Werden diese unterschiedlichen Energien empfangen und daraus das Verhältnis Energie der höheren Frequenz f2 zu Energie der niedrigeren Frequenz f1 gebildet, so kann mit dem ermittelten Zahlenwert der entsprechende Punkt auf der Kurve in Fig. 3 aufgesucht und darunter auf der Abszisse die Rißtiefe abgelesen werden. Werden andere Frequenzen gewählt, müssen entsprechend geänderte Kurven ermittelt und verwendet werden.

Liste der verwendeten Bezugszeichen

1 Ort
2 Eindringtiefe
3 Eindringtiefe
4 Riß
5 Rad
6 Radumfangsfläche
7 Ultraschallimpuls
8 Ultraschallimpuls
9 Rißtiefe

**Patentansprüche**

1. Verfahren zur zerstörungsfreien Prüfung von Eisenbahnrädern mittels Ultraschall auf Risse im Bereich der Radumfangsfläche, wobei in das Rad von einem Ort der Radumfangsfläche aus ein im Werkstück Rayleighwellen ausbildender Ultraschallimpuls mit einer ersten Frequenz (f1) eingeschallt wird, dessen Echo an einem Riß ein Fehlerecho ergibt, daß erfaßt und ausgewertet wird, dadurch gekennzeichnet, daß in das Rad im Bereich der Radumfangsfläche mindestens ein weiterer im Werkstück Rayleighwellen ausbildender Ultraschallimpuls mit je zum ersten unterschiedlicher Frequenz (f2) eingeschallt wird, wobei entstehende Fehlerechos als von den Rißflächen rückgestrahlte Energien empfangen werden und daß das jeweilige Verhältnis dieser Energien je Riß gebildet wird, wobei der Zahlenwert dieses Verhältnisses unter Zugrundelegung der verwendeten Frequenzen als Bestimmungswert für die Rißtiefe verwendet wird.

2. Verfahren nach Anspruch 1, dadurch gekennzeichnet, daß die ermittelte Rißtiefe mit einer vorgegebenen Rißtiefe verglichen wird und nur die Risse mit einer größeren Rißtiefe als die vorgegebene angezeigt werden.

3. Verfahren nach Anspruch 1, dadurch gekennzeichnet, daß die zwei Ultraschallimpulse unterschiedlicher Frequenz gleichzeitig oder in bekanntem zeitlichen Abstand eingeleitet werden.

4. Verfahren nach Anspruch 1, dadurch gekennzeichnet, daß die erste Frequenz (f1) kleiner als 1000 KHz und die zweite Frequenz (f2) größer als 1000 Khz ist.

5. Verfahren nach Anspruch 1, dadurch gekennzeichnet, daß beide Frequenzen (f1,f2) kleiner als 1000 KHz sind.

6. Verfahren nach Anspruch 1, dadurch gekennzeichnet, daß die erste Frequenz (f1) 250-450 KHz und die zweite Frequenz (f2) 750-1350 KHz beträgt.

**Claims**

1. A method for the non-destructive testing of railway wheels by ultrasound to detect cracks in the region of the peripheral surface of the wheel, whereby from a location on the peripheral surface of the wheel an ultrasonic pulse of a first frequency (f1) and forming Raleigh waves in the workpiece is irradiated into the wheel, the echo producing a fault echo at a crack and which is detected and evaluated, characterised in that at least one further ultrasonic pulse forming Raleigh waves in the workpiece, each pulse having a frequency (f2) which differs from the first being irradiated into the wheel in the region of the peripheral surface of the wheel, any fault echoes arising being received as energies radiated back from the crack surfaces and in that the respective ratios of these energies is formed for each crack, the numerical value of this ratio being used on a basis of the frequencies employed as a value for determining the depth of the crack.

2. A method according to Claim 1, characterised in that the ascertained crack depth is compared with a predetermined crack depth and only those cracks having a depth greater than the given depth are indicated.

3. A method according to Claim 1, characterised in that the two ultrasonic pulses of different frequency are introduced simultaneously or at a known interval of time.

4. A method according to Claim 1, characterised in that the first frequency (f1) is less than 1000 KHz and the second frequency (f2) is greater than 1000 Khz.

5. A method according to Claim 1, characterised in that both frequencies (f1, f2) are less than 1000 Khz.

6. A method according to Claim 1, characterised in that the first frequency (f1) is 250-450 Khz and the second frequency (f2) is 750-1350 Khz.

**Revendications**

1. Procédé de contrôle non destructif de roues de véhicules ferroviaires, à l'aide d'ultrasons, pour détecter la présence de fissures dans la zone de la face périphérique de la roue, suivant lequel on envoie dans la roue, à partir d'un endroit de la face périphérique de celle-ci, une impulsion ultrasonique à une première fréquence (f1) produisant des ondes de Rayleigh dans la pièce, et dont l'écho donne, au niveau d'une fissure, un écho de défaut qui est détecté et exploité, caractérisé en ce qu'on envoie dans la roue, dans la zone de la face périphérique de celle-ci, au moins une autre impulsion ultrasonique produisant des ondes de Rayleigh dans la pièce, chaque fois à une fréquence (f2) différente de la première, des échos de défaut générés étant reçus sous forme de quantités d'énergie réfléchies par les surfaces de la fissure, et en ce qu'on détermine le rapport de ces quantités d'énergie fissure par fissure, la valeur numérique de ce rapport étant utilisée comme valeur servant à déterminer la profondeur de la fissure, à partir des fréquences mises en jeu.

2. Procédé suivant la revendication 1, caractérisé en ce que la profondeur de fissure détectée est comparée à une profondeur de fissure définie au préalable, et en ce que seules les fissures dont la profondeur est plus grande que la profondeur définie au préalable sont signalées.

3. Procédé suivant la revendication 1, caractérisé en ce que les deux impulsions ultrasoniques de fréquence différente sont envoyées simultanément ou avec un décalage dans le temps connu.

4. Procédé suivant la revendication 1, caractérisé en ce que la première fréquence (f1) est inférieure à 1000 KHz, et la seconde fréquence (f2) est supérieure à 1000 KHz.

5. Procédé suivant la revendication 1, caractérisé en ce que les deux fréquences (f1, f2) sont inférieures à 1000 KHz.

6. Procédé suivant la revendication 1, caractérisé en ce que la première fréquence (f1) est de 250-450 KHz, et la seconde fréquence (f2), de 750-1350 KHz.

$$\frac{f1(x)}{f1(0)}$$

*Fig1*

$$\frac{f2(x)}{f2(0)}$$

*Fig2*

$$\frac{\int_0^x \frac{f2(x)}{f2(0)}\,dx}{\int_0^x \frac{f1(x)}{f1(0)}\,dx}$$

*Fig3*

Fig. 4